# EUROPÄISCHE PATENTSCHRIFT

(11) **EP 0 607 502 B1**
(45) Veröffentlichungstag und Bekanntmachung des Hinweises auf die Patenterteilung: **15.04.1998**
(21) Anmeldenummer: 93115940.4
(22) Anmeldetag: 02.10.1993
(51) Int. Cl.: C08J 11/02, C08J 11/04

(54) **Verfahren zur Rückgewinnung von lösungsmittelhaltigen Kunstharzlack-Abfällen**
Process for recycling solvent-containing wastes of synthetic resin varnishes
Procédé pour recycler des déchets de vernis à résine synthétique contenant des solvants

(30) Priorität: 21.01.1993 DE 4301491
(43) Veröffentlichungstag der Anmeldung: 27.07.1994
(73) Patentinhaber: Firma Carl Freudenberg, 69469 Weinheim (DE)
(72) Erfinder: Kosack, Steffen, Dr., D-67453 Hassloch (DE); Seiderer, Stefan, D-69517 Gorxheimertal (DE); Anselm, Bardo, D-69514 Laudenbach (DE)

(56) Entgegenhaltungen:
- EP-A- 0 510 293
- EP-A- 0 510 301

## Beschreibung

Die Erfindung befaßt sich mit der Rückgewinnung von lösungsmittelhaltigen Kunstharzlack-Abfällen, wie sie in der verarbeitenden Industrie als Fehlchargen und bei der Reinigung von Produktleitungen anfallen. Unter dem Begriff "Kunstharzlack" sollen im folgenden verstanden werden Acrylharzlacke, Alkydharzlacke und Cumaron-Indenharzlacke.

Diese Abfälle werden bisher meistens so weit wie möglich durch Abdestillieren von dem Lösungsmittel befreit. Zurück bleibt meist eine lösungsmittelarme Paste, welche als Sondermüll entsorgt werden muß. Diese Aufarbeitung erfolgt durch Lohndestillateure und ist daher sehr kostenaufwendig.

Für die Aufarbeitung lösungsmittelhaltiger PVC-Abfallpasten ist aus der DE 41 13 336 C1 ein Verfahren bekannt geworden, bei dem man diese Pasten mit dem Emulgator Acylpolyethylenglykolester versetzt, einen Überschuß an Wasser zugibt, mittels Wasserdampf das Lösungsmittel austreibt, das entstandene zweiphasige Destillat vom Lösungsmittel trennt und das verbleibende, im Wasser schwimmende PVC-Granulat abfiltriert und trocknet.

DE 41 13 282 C1 beschreibt ein Verfahren zur Rückgewinnung von Polyurethan aus lösungsmittelhaltigen Abfallpasten, bei welchen diese ebenfalls mit dem Emulgator Acylpolyethylenglykolester versetzt und anschließend mit einem 12-fachen Überschuß an Wasser 1 Stunde lang verrührt werden. Anschließend wird das Lösungsmittel durch Wasserdampf ausgetrieben, das entstandene zweiphasige Destillat vom Lösungsmittel getrennt und das im Wasser des Blasenrückstands schwimmende Polyurethan-Granulat abfiltriert und getrocknet.

Beide Verfahren versagen bei der Aufbereitung von lösungsmittelhaltigen Kunstharzlackresten und -abfällen der oben genannten Art; die aufzuarbeitenden Kunstharzlackabfälle fallen nicht granulatartig und klebefrei aus.

Die vorliegende Erfindung hat zur Aufgabe, ein Regenerierverfahren anzugeben, welches die Gewinnung lösungsmittelfreier Kunstharzlackreste ermöglicht, welche ökologisch unbedenklich sind. Sondermüll soll dabei nicht anfallen; das Lösungsmittel soll quantitativ wiedergewonnen werden.

Die Lösung dieser Aufgabe besteht in einem Verfahren, wie es im Patentanspruch angegeben ist.

Die aufzubereitenden Industrie-Kunstharzlackreste und -abfälle werden in einem Rührgefäß mit 5 Gew.% des Emulgators Acylpolyethylenglykolester vermischt. Diesem Gemisch wird im Gewichtsverhältnis 1:1 20 %ige wäßrige Schwefelsäure zugemischt. Dabei wird gerührt.

Um zu einem fein zerteilten Regenerat zu gelangen, gibt man dieser Emulsion 5 bis 10 %ige, wäßrige Polyvinylalkohol-Lösung in einem Gewichtsverhältnis von 1 bis 5 %, bezogen auf das Emulsions-Gewicht, zu.

Die Menge des oben angegebenen Polyester-Emulgators bestimmt wesentlich die Korngröße des freischwimmenden Regenerats als Granulat am Ende der Verarbeitung. Ein geringerer Anteil als angegeben führt zu einer sehr grobkörnigen Struktur mit Einschlüssen aus Verunreinigungen, ein höherer Emulgatoranteil bewirkt ein zu feinkörniges Granulat, welches beim Filtrieren Probleme bereitet.

Aus der Emulsion mit den oben beschriebenen Bestandteilen wird mittels der bekannten Wasserdampfdestillation das Lösungsmittel ausgetrieben. Es handelt sich um die in der chemischen Technik bekannte Trägerdampfdestillation, d.h. eine Destillation mit Wasserdampf als Träger. Sie dient dazu, hochsiedende, mit Wasser nicht oder nur wenig mischbare Flüssigkeiten schon bei 98 bis 100°C destillieren zu können. Zu dem verhältnismäßig niederen Dampfdruck der destillierten Flüssigkeit addiert sich dann der Dampfdruck des heißen Wasserdampfes. Das solcherart abgezogene Lösungsmittel bzw. Lösungsmittelgemisch kann - gegebenenfalls nach Entfernen von Wasser - wieder in den Produktionsablauf zurückgeführt werden.

Dem verbleibenden Destillat werden 10 Gew.% eines partiell veretherten Methylolmelamins in Form einer 60 %igen, wäßrigen Lösung eines Amino- oder Phenoplast-Vorkondensats zugegeben, welches Methylolgruppen enthält. Diese Maßnahme dient dazu, daß das ausgefallene Regenerat klebefrei anfällt. Der Ansatz wird noch 15 Minuten nachgerührt.

Als Rückstand verbleibt eine wäßrige Phase, in welcher ein feinkörniges, fast pulverartiges Kunstharzlack-Granulat mit einer Korngröße von 100 bis 500 µm schwimmt. Es wird abfiltriert über ein entsprechendes Siebbandfilter und anschließend mit einem Siebbandtrockner oder in einem Trockenofen getrocknet.

Das Filtrat kann als "Kunststoffabfälle verschiedener Art "zur Deponie verbracht werden oder als Regenerat Verwendung finden, z.B. als Füllstoff in der Kautschukindustrie.Es stellt keinen Sondermüll mehr dar.

Ein besonderer Vorteil der Erfindung ist, daß die Feststoffanteile, welche Kunstharzlack und Zusatzstoffe enthalten, quantitativ und lösungsmittelfrei wiedergewonnen werden. Sie sind für Kunststoffartikel minderwertiger Qualität wieder ohne Vorbehalt einsetzbar, was zu einer erheblichen Verringerung des Rohstoffverbrauchs führt. Die für das Verfahren notwendigen Hilfsstoffe sind im Handel preiswert zu erhalten und in der Handhabung aus Sicht des Arbeitsschutzes unbedenklich.

## Patentansprüche

1. Verfahren zur Rückgewinnung von lösungsmittelhaltigen Kunstharzlack-Abfällen, wobei man
die Abfälle mit 5 Gew.% des Emulgators Acylpolyethylenglykolester vermischt,
im Gewichtsverhältnis 1:1 20 %ige Schwefelsäure zumischt, danach dieser Emulsion 5 bis 10 %ige, wäßrige Polyvinylalkohol-Lösung in einer Menge von 1 bis 5 Gew.% zugibt, mittels Wasserdampf das Lösungsmittel austreibt,
dem verbleibenden Rest 10 Gew.% eines partiell veretherten Methylolmelamins in Form einer 60 %igen, wäßrigen, Methylolgruppen enthaltenden Lösung eines Amino- oder Phenoplast-Vorkondensats zugibt und 15 Minuten nachrührt,
den in der Mischung schwimmenden, eine Korngröße von 100 bis 500 µm aufweisenden Kunstharzlackrückstand über ein Siebbandfilter abfiltriert und anschließend trocknet.

## Claims

1. A method of recovering solvent-containing synthetic-resin paint wastes, wherein
the wastes are mixed with 5% by weight of the emulsifier acyl polyethylene glycol ester,
20% strength sulphuric acid is admixed in a weight ratio of 1:1,
from 5 to 10% strength aqueous polyvinyl alcohol solution is then added to this emulsion in an amount of from 1 to 5% by weight,
the solvent is expelled by means of steam,
to the residue which remains there is added 10% by weight of a partially etherified methylol melamine in the form of a 60% strength aqueous solution of an amino-resin or phenolic-resin precondensate, containing methylol groups, and the mixture is subsequently stirred for 15 minutes, and
the synthetic-resin paint residue having a particle size of from 100 to 500 µm which is floating in the mixture is filtered off by way of a screen belt filter and is subsequently dried.

## Revendications

1. Procédé pour la récupération de déchets de laques, de vernis ou de peintures synthétiques contenant des solvants, dans lequel
on mélange les déchets avec 5% en poids de l'émulsifiant ester acylique de polyéthylèneglycol,
on y ajoute par mélange de l'acide sulfurique à 20% dans un rapport pondéral de 1:1,
on ajoute ensuite à cette émulsion une solution aqueuse à 5-10% d'alcool polyvinylique en une quantité de 1 à 5% en poids,
on élimine le solvant en utilisant de la vapeur d'eau,
on ajoute au résidu subsistant 10% en poids d'une méthylolmélamine partiellement éthérifiée sous forme d'une solution aqueuse à 60% contenant des groupes méthylol d'un précondensat d'aminoplaste ou de phénoplaste et on poursuit l'agitation pendant 15 minutes supplémentaires,
on sépare par filtration sur un filtre à bande perforée le résidu de laque, de vernis ou de peinture synthétique flottant dans le mélange, présentant une granulométrie de 100 à 500 µm, puis on le sèche.
